# EUROPÄISCHE PATENTANMELDUNG

(11) **EP 2 407 807 A2**
(43) Veröffentlichungstag der Anmeldung: **18.01.2012**
(21) Anmeldenummer: 11174273.0
(22) Anmeldetag: 15.07.2011
(51) Int. Cl.: G02B 6/14

(54) **Lichtleitfaseranordnung sowie Laseranordnung mit einer solchen Lichtleitfaseranordnung**

(30) Priorität: 16.07.2010 DE 102010031469
(71) Anmelder: Rofin-Sinar Laser GmbH, 22113 Hamburg (DE)
(72) Erfinder: Grundmann, Frank-Peter, 20459 Hamburg (DE); Becker, Frank, 23560 Lübeck (DE); Höfer, Sven, 85232 Bergkirchen (DE)
(74) Vertreter: Mörtel & Höfner

(57) **Zusammenfassung**

Eine Lichtleitfaseranordnung zum Transport eines für die Materialbearbeitung verwendeten und in einer Grundmode-Strahlqualität am Ausgang einer Ausgangsfaser (4) vorliegenden Laserstrahls (LS) umfasst eine Multimode-Mischfaser (2), die zum Mischen der sich in ihr ausbreitenden Moden zumindest auf einem Teil ihrer Länge einen gekrümmten Verlauf aufweist, und deren numerische Apertur größer ist als die numerische Apertur der den Laserstrahl (LS) am Eingang der Multimode-Mischfaser (2) bereitstellenden und an den Eingang der Multimode-Mischfaser (2) gekoppelten Ausgangsfaser (4). Zum Transport des am Ausgang der Multimode-Mischfaser (2) anstehenden Laserstrahls (LS) zu einem Prozessort ist eine Multimode-Transportfaser (14) vorgesehen, deren numerische Apertur gleich oder größer ist als die numerische Apertur der Multimode-Mischfaser (2) Durch diese Maßnahme ist es möglich, einen Laserstrahl (LS) mit geringerer Strahlqualität zu erzeugen und verlustarm zu dem Prozessort zu führen, der ein gleichmäßiges und rotationssymmetrisches Intensitätsprofil mit einem flachem Plateau und steilen Flanken aufweist. Eine solche Lichtleitfaseranordnung ist insbesondere zur Verwendung in einer Laseranordnung geeignet, bei der als Laserstrahlquelle ein Faserlaser (6) vorgesehen ist.

## Beschreibung

Die Erfindung bezieht sich auf eine Lichtleitfaseranordnung zum Transport eines für die Materialbearbeitung verwendeten Laserstrahls, insbesondere eines von einem Faserlaser als Laserstrahlquelle erzeugten Laserstrahls. Die Erfindung bezieht sich außerdem auf eine Laseranordnung mit einer solchen Lichtleitfaseranordnung.

Faserlaser (Oszillator- oder Verstärkeranordnungen) mit hohen Ausgangsleistungen im Bereich von mehreren Watt bis in den Kilowatt-Bereich werden vermehrt zur Erzeugung oder Verstärkung von Laserstrahlen für die Materialbearbeitung eingesetzt. Und sind in der Regel so ausgeführt, dass der am Ausgang einer Ausgangsfaser anstehende Ausgangslaserstrahl eine sogenannte Grundmode-Strahlqualität aufweist. Hierzu werden Fasern mit kleinem Kerndurchmesser verwendet, in der nur eine oder allenfalls wenige Moden geführt werden können.

In einer Reihe von Applikationen bei der Materialbearbeitung, beispielsweise Schweißanwendungen, ist es jedoch von Vorteil, wenn am Prozessort ein Laserstrahl zum Einsatz gelangt, der ein möglichst gleichmäßig verlaufendes symmetrisches Intensitätsprofil aufweist, dessen Strahlqualität kleiner ist (Strahlparameterprodukt ist größer) als die Grundmode-Strahlqualität des vom Faserlaser erzeugten Laserstrahls und somit in einer Transportfaser mit deutlich größerem Kern transportiert werden können, in der erheblich mehr Moden, beispielsweise mehr als 300, geführt werden können als in der Ausgangsfaser eines Faserlasers. Bei der Überführung des von einem Faserlaser erzeugten Laserstrahls in eine solche Multimode-Transportfaser durch eine Spleißkopplung oder über eine Linsenabbildung treten aber ausgeprägte Asymmetrien in der Intensitätsverteilung des Laserstrahls um die Strahlachse auf.

Der Erfindung liegt daher die Aufgabe zu Grunde, eine Lichtleitfaseranordnung zum Transport eines für die Materialbearbeitung verwendeten Laserstrahls anzugeben, mit der es möglich ist, aus einem in einer Grundmode-Strahlqualität vorliegenden Laserstrahl einen Laserstrahl mit geringerer Strahlqualität zu erzeugen, der ein weitgehend gleichmäßiges, rotationssymmetrisches Intensitätsprofil mit einem flachen Plateau und steilen Flanken aufweist. Der Erfindung liegt außerdem die Aufgabe zu Grunde, eine Laseranordnung mit einer solchen Lichtleitfaseranordnung anzugeben.

Hinsichtlich der Lichtleitfaseranordnung wird die genannte Aufgabe gemäß der Erfindung gelöst mit einer Lichtleitfaseranordnung mit den Merkmalen des Patentanspruches 1. Gemäß diesen Merkmalen umfasst die Lichtleitfaseranordnung eine Multimode-Mischfaser, die zum Mischen der sich in ihr ausbreitenden Moden zumindest auf einem Teil ihrer Länge einen gekrümmten Verlauf hat, und deren numerische Apertur größer ist als die numerische Apertur einer den Laserstrahl am Eingang der Multimode-Mischfaser bereitstellenden und an den Eingang der Multimode-Mischfaser gekoppelten Ausgangsfaser. Zum Transport des am Ausgang der Multimode-Mischfaser anstehenden Laserstrahls zu einem Prozessort ist eine Multimode-Transportfaser vorgesehen, deren numerische Apertur gleich oder größer ist als die numerische Apertur der Multimode-Mischfaser.

Die Erfindung beruht dabei auf der Überlegung, dass es in einer Lichtleitfaser bei der Reflektion des Laserstrahls an der durch Rauigkeiten an der Kern-Mantel-Grenzfläche zu einer Modenmischung kommt und dementsprechend das Ausmaß der Modenmischung erhöht werden kann, wenn durch eine Krümmung der Lichtleitfaser die Anzahl der Reflexionen an der Kern-Mantel-Grenzfläche erhöht wird. Auf diese Weise kann eine Anregung des gesamten Modenvolumens der Lichtleitfaser erreicht werden, was wiederum zu einer homogenen und rotationssymmetrischen Intensitätsverteilung mit flachem Plateau (flattop-Profil) des in ihr sich ausbreitenden Laserstrahles führt. Da zum Transport des am Ausgang der Multimode-Mischfaser anstehenden Laserstrahls zu einem Prozessort eine Multimode-Transportfaser vorgesehen ist, deren numerische Apertur gleich oder größer ist als die numerische Apertur der Multimode-Mischfaser, d.h. in der deutlich weniger Moden eingekoppelt werden als diese zu transportieren vermag (Unterfüllung des Modenvolumens), kann die gesamte am Ausgang der Multimodefaser anstehende Laserleistung auch dann verlustarm zu einem Prozessort transportiert werden, wenn die Multimode-Transportfaser ihrerseits zum Führen des Laserstrahls zum Prozessort notwendige Biegungen aufweist.

In einer vorteilhaften Ausgestaltung der Erfindung ist in Ausbreitungsrichtung des Laserstrahls gesehen nach der Multimode-Mischfaser ein Multimode-Laserverstärker, beispielsweise ein konventioneller Stablaser oder ein faseroptischer Laserverstärker angeordnet.

Insbesondere sind Ausgangsfaser, Multimode-Mischfaser, ein gegebenenfalls vorhandener Multimode-Laserverstärker und Transportfaser unmittelbar, d.h. ohne die Verwendung von Freistrahloptiken optisch aneinander gekoppelt. Mit anderen Worten: Zwischen der Ausgangsfaser und der Transportfaser, d.h. in der gesamten Übertragungsstrecke zwischen Ausgangsfaser und Transportfaser findet keine freie Strahlpropagation statt. Durch diese Maßnahme werden Übertragungsverluste minimiert.

Wenn die Multimode-Mischfaser in Form einer Spule mit einer Vielzahl von Windungen gewickelt ist, lassen sich fertigungstechnisch auf einfache Weise reproduzierbare Eigenschaften der Multimode-Mischfaser realisieren.

Weitere vorteilhafte Ausgestaltungen der Erfindung sind in den weiteren Unteransprüchen angegeben.

Hinsichtlich der Laseranordnung wird die Aufgabe mit einer Laseranordnung mit den Merkmalen des Patentanspruches 7 gelöst, deren Vorteile unmittelbar den zu der Lichtleitfaseranordnung angegebenen Vorteilen entsprechen.

Zur weiteren Erläuterung der Erfindung wird auf die Figuren verwiesen. Es zeigen:
Fig. 1 und 2 jeweils eine Lichtleitfaseranordnung gemäß der Erfindung in einer grob schematischen Prinzipskizze,
Fig. 3 eine vergrößerte Darstellung eines Ausschnitts der Multimode-Mischfaser sowie sich in dieser ausbreitende Laserstrahlen,
Fig. 4 ein schematisches Diagramm, in dem veranschaulicht ist, wie der der Winkel, mit dem ein sich unter einem Winkel θ₀ zur Mittenachse ausbreitender Laserstrahl im gekrümmten Bereich relativ zur Normalen auf die Grenzfläche zwischen Kern und Cladding auftrifft, vom Krümmungsradius R abhängt,
Fig. 5 und 6 jeweils Diagramme, in denen das Intensitätsprofil I eines von einem Faserlaser erzeugten Laserstrahls in einer Achse x quer zur Ausbreitungsrichtung am Ausgang einer Multimode-Transportfaser mit bzw. ohne Zwischenschaltung einer Multimode-Mischfaser aufgetragen ist.

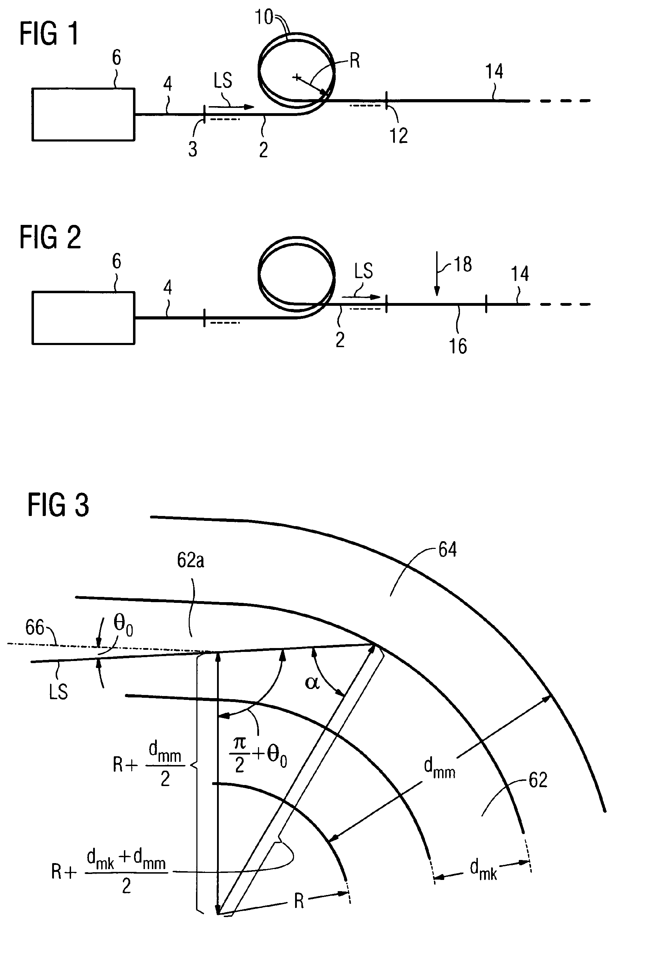

Gemäß Fig. 1 enthält die Lichtleitfaseranordnung eine Multimode-Mischfaser 2, deren Eingang an einer symbolisch durch eine vertikale Linie veranschaulichten Koppelstelle 3 optisch unmittelbar, d.h. ohne eine dazwischenliegende Übertragungsstrecke, innerhalb der sich ein Laserstrahl LS frei ausbreitet, an einen Ausgang einer Ausgangsfaser 4 gekoppelt ist, an dem ein Laserstrahl LS mit einer Grundmode-Strahlqualität vorliegt. Im Ausführungsbeispiel handelt es sich bei der Ausgangsfaser 4 um die Ausgangsfaser eines als Laserstrahlquelle dienenden Faserlasers 6, der einen Laserstrahl LS erzeugt, dessen Strahlparameterprodukt wθ (Taillenradius w, Fernfelddivergenz θ) 0,34mm·mrad beträgt.

Die Multimode-Mischfaser 2 ist optisch unmittelbar an die Ausgangsfaser 4 vorzugsweise über eine Spleißverbindung gekoppelt, bei der sich beispielsweise um einen Stoßspleiß oder aber um eine Spleißverbindung mit Hilfe eines sogenannten Tapers handeln kann.

Die Ausgangsfaser 4 ist beispielsweise eine Stufenindexfaser mit einer numerischen Apertur NAₐ = 0,07, deren Kern beispielsweise einen Durchmesser dₐₖ = 25µm und deren Mantel einen Durchmesser von beispielsweise dₐₘ = 400µm aufweist.

Bei der Multimode-Mischfaser 2 handelt es sich im Ausführungsbeispiel ebenfalls um eine Stufenindexfaser, deren Kern einen Durchmesser dₘₖ = 50µm mit einer numerischen Apertur NAₘ = 0,09 und deren Mantel einen Durchmesser dₘₘ = 125µm aufweist. Die numerische Apertur NAₘ ist dementsprechend um etwa den Faktor 1,3 größer als die numerische Apertur NAₐ der Ausgangsfaser 4. Grundsätzlich können als Multimode-Mischfasern 2 auch Gradientenindexfasern eingesetzt werden.

Die Multimode-Mischfaser 2 hat auf einem Teil ihrer Länge einen gekrümmten Verlauf, indem sie gemäß dem Ausführungsbeispiel mit einem Wickel- oder Windungsradius R mit einer Mehrzahl von Windungen 10 in Form einer Spule gewickelt ist. Im Ausführungsbeispiel beträgt der Windungsradius R etwa 50mm und die Windungszahl etwa 10.

An ihrem der Koppelstelle 3 abgewandten Ausgang ist die Multimode-Mischfaser 2 ebenfalls über eine durch einen senkrechten Strich gekennzeichnete Koppelstelle 12 an eine Multimode-Transportfaser 14 optisch gekoppelt, mit der der Laserstrahl zu einer an einem Prozessort befindlichen, in der Figur nicht dargestellten Auskoppeleinheit, beispielsweise eine Fokussiereinheit geführt wird.

Die Multimode-Transportfaser 14 ist im Ausführungsbeispiel ebenfalls eine Stufenindexfaser mit einem Kerndurchmesser von 50µm und einem Cladding-Durchmesser von 125µm. Ihre numerische Apertur NAₜ beträgt 0,22 und ist in diesem Ausführungsbeispiel größer als die numerische Apertur NAₘ der Multimode-Mischfaser 2.

Mit den genannten Parametern wird ein am Ausgang der Multimode-Transportfaser 14 anstehender, d. h. am Prozessort verfügbarer Laserstrahl LS erzeugt, dessen Strahlparameterprodukt etwa 2,5mm·mrad beträgt. Dementsprechend ist das Strahlparameterprodukt des am Ausgang der Multimode-Mischfaser 2 anstehenden Laserstrahls gegenüber dem Strahlparameterprodukt des am Ausgang der Ausgangsfaser 4 anstehenden Laserstrahls um etwa den Faktor 7 vergrößert, d.h. die Strahlqualität ist entsprechend verringert.

Um bei der Bearbeitung eines Werkstückes mit einem fokussierten Laserstrahl LS Rückwirkungen des vom Werkstück in die Multimode-Transportfaser 14 zurück gekoppelten Laserstrahl LS auf die Laserstrahlquelle, im Beispiel der Faserlaser 6, zu vermeiden, sind außerdem an den Enden der Multimode-Mischfaser 2 sogenannte Moden-Stripper angeordnet, die einen sich im Cladding der Multimode-Mischfaser 2 in Richtung zum Faserlaser 6 ausbreitenden Laserstrahl LS auskoppeln.

Sowohl die Multimode-Mischfaser 2 als auch die Multimode-Transportfaser 14 können Kerne aufweisen, die von der kreisrunden Geometrie abweichen. Bei der Multimode-Transportfaser 14 kann es sich außerdem auch um eine Gradientenfaser handeln.

Durch die Verwendung der Multimode-Mischfaser 2 können über den Radius der Wicklung, der Anzahl der Windungen und den Durchmesser des Kerns die jeweils gewünschten Strahlqualitäten des am Ausgang der Multimode-Mischfaser 2 anstehenden Laserstrahls LS eingestellt werden, wobei bei der Dimensionierung des Radius R die vom Hersteller angegebenen minimalen Biegeradien nicht unterschritten werden dürfen. Im Ausführungsbeispiel konnte mit den genannten Fasern bei einem Wickelradius von 50mm und etwa 10 Windungen das Modenvolumen, d.h. das zum Transport des Laserstrahls verfügbare Volumen der Multimode-Mischfaser vollständig ausgefüllt und am Ausgang der Multimode-Mischfaser 2 ein Laserstrahl LS mit praktisch nahezu rotationssymmetrischer und gleichmäßig mit einem flachen Plateau verlaufender Intensitätsverteilung um die Strahlachse erzeugt werden.

Im Ausführungsbeispiel der Fig. 2 ist am Ausgang der Multimode-Mischfaser 2 ein Multimode-Laserverstärker 16, beispielsweise ein faseroptischer Laserverstärker oder ein konventioneller stabförmiger Laserverstärker, angeschlossen, der zur Verstärkung des in ihn eingekoppelten Laserstrahls LS optisch gepumpt wird, wie dies durch den Pfeil 18 symbolisch veranschaulicht ist. Zwischen dem Multimode-Laserverstärker 16 und der Multimode-Mischfaser 2 kann sich alternativ zum dargestellten Ausführungsbeispiel auch eine Multimode-Transportfaser befinden, so dass der Multimode-Laserverstärker 16 nicht unmittelbar am Ausgang der Multimode-Mischfaser 2 angeschlossen ist.

In der vergrößerten Darstellung der Multimode-Mischfaser 2 gemäß Fig. 3 breitet sich ein von der Ausgangsfaser in die Multimode-Mischfaser 2 eingekoppelter Laserstrahl LS in einem geradlinig verlaufenden Bereich 62a des Kerns 62 unter einem Winkel θ₀ zur Mittenachse 66 aus, der dem der numerischen Apertur NAₒ der Ausgangsfaser 4 zugehörigen Ausbreitungswinkel entspricht. Die Multimode-Mischfaser 2 mit einem Durchmesser dₘₖ der Kerns 62 und einem Durchmesser dₘₘ des Claddings 64 ist mit einem Wickel- oder Krümmungsradius R zu einer Spule aufgewickelt. Der Laserstrahl LS trifft nun im gekrümmten Bereich der Multimode-Mischfaser 2 unter einem Winkel α relativ zur Normalen auf die Grenzfläche zwischen Kern 62 und Cladding 64, der kleiner ist als der Winkel 90° - θ₀, mit dem dieser Laserstrahl LS bei geradlinig verlaufender Multimode-Mischfaser 2 relativ zur Normalen auf die Grenzfläche auftreffen würde. Damit dieser Laserstrahl LS im gekrümmten Bereich total an dieser Grenzfläche reflektiert wird, darf dieser Winkel α den Grenzwinkel α_{G} für die Totalreflektion in der Multimode-Mischfaser 2 nicht unterschreiten. Dieser Winkel α nimmt mit abnehmenden Krümmungsradius R ab.

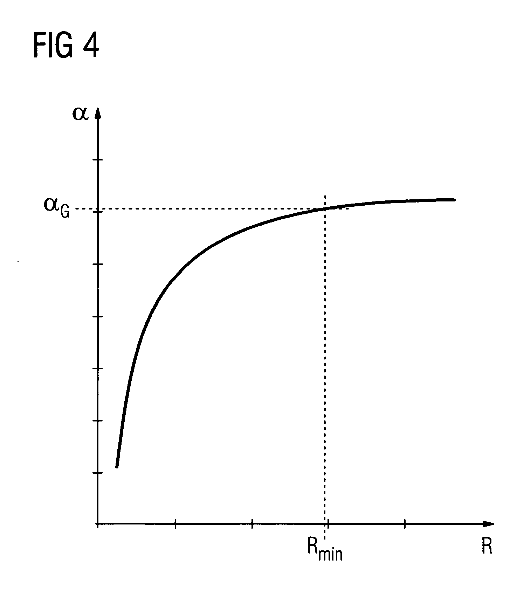

Im Diagramm gemäß Fig. 4 ist in einer Prinzipdarstellung die Abhängigkeit des Winkels α, mit dem ein sich unter einem einer kleinen Winkel relativ zur Mittenachse einer Ausgangsfaser ausbreitender Laserstrahl im gekrümmten Bereich relativ zur Normalen auf die Grenzfläche zwischen Kern 62 und Cladding 64 auftrifft, gegen den Krümmungsradius R aufgetragen. Dem Diagramm ist zu entnehmen, dass der Winkel α mit zunehmenden Krümmungsradius R zunimmt, und dass der Krümmungsradius R der Multimode-Mischfaser 2 einen minimalen Radius Rₘᵢₙ nicht unterschreiten darf, um sicherzustellen, dass alle von der Ausgangsfaser in die Multimode-Mischfaser 2 eingekoppelten Laserstrahlen an der Grenzfläche totalreflektiert werden, so dass die gesamte eingekoppelte Laserleistung verlustfrei durch die Multimode-Mischfaser 2 transportiert wird.

Die Multimode-Mischfaser 2 kann anstelle der im Ausführungsbeispiel dargestellten spulenförmigen Anordnung auch in anderer Weise in einem gekrümmten Verlauf verlegt werden. Beispielsweise ist ein gleichmäßig oder ungleichmäßig mäandernder Verlauf möglich. Wesentlich ist jedoch, dass die Krümmungsradien innerhalb der erlaubten Biegeradien hinreichend klein sind, um eine effektive Modenumwandlung und Modenmischung zu ermöglichen und nicht zu klein, um das Entstehen von Mantelmoden zu unterdrücken und einen verlustfreien Transport der Laserleistung sicherzustellen.

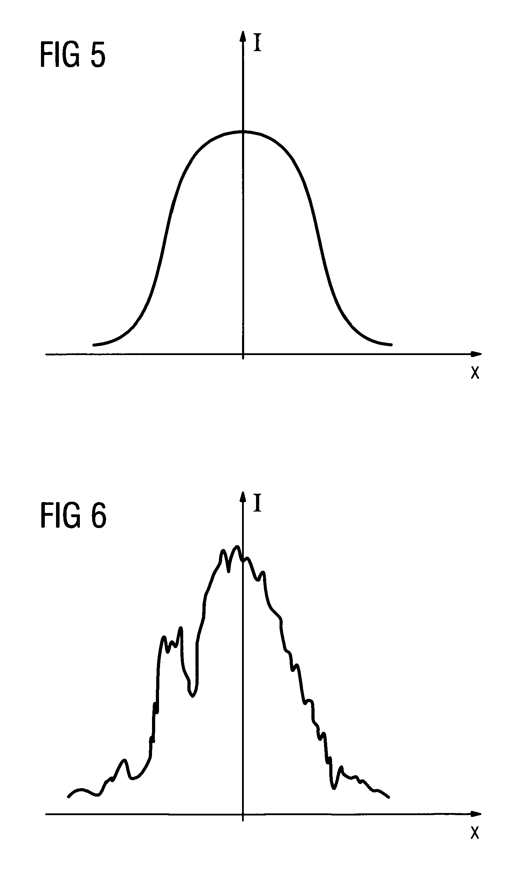

Das in Fig. 5 dargestellte Intensitätsprofil eines am Ausgang einer Multimode-Transportfaser mit einer numerischen Apertur NAₜ = 0,22 anstehenden Laserstrahls bei Zwischenschaltung einer Multimode-Mischfaser (NAₘ = 0,09, dₘₖ = 50µm, dₘₘ = 125µm mit Wickelradius R = 50mm und Windungszahl n = 10) zeigt, dass am Prozessort ein Laserstrahl mit symmetrischer Strahlverteilung und glatt bzw. gleichmäßig verlaufenden steilen Flanken vorliegt, dessen Strahlparameterprodukt etwa 2,5mm·mrad beträgt.

Demgegenüber ist gemäß Fig. 6 das Intensitätsprofil eines am Ausgang der gleichen unmittelbar an die Ausgangsfaser angekoppelten Multimode-Transportfaser anstehenden Laserstrahls deutlich asymmetrisch und zeigt einen ungleichmäßigen Verlauf. Darüber hinaus ist das Strahlparameterprodukt um den Faktor 2 kleiner als das Strahlparameterprodukt des mit zwischengeschalteter Multimode-Mischfaser am Ausgang der Multimode-Transportfaser erzeugten Laserstrahls.

## Patentansprüche

1. Lichtleitfaseranordnung zum Transport eines für die Materialbearbeitung verwendeten und in einer Grundmode-Strahlqualität am Ausgang einer Ausgangsfaser (4) vorliegenden Laserstrahls (LS) mit einer Multimode-Mischfaser (2), die zum Mischen der sich in ihr ausbreitenden Moden zumindest auf einem Teil ihrer Länge einen gekrümmten Verlauf aufweist, und deren numerische Apertur größer ist als die numerische Apertur der den Laserstrahl (LS) am Eingang der Multimode-Mischfaser (2) bereitstellenden und an den Eingang der Multimode-Mischfaser (2) gekoppelten Ausgangsfaser (4), und bei der zum Transport des am Ausgang der Multimode-Mischfaser (2) anstehenden Laserstrahls (LS) zu einem Prozessort eine Multimode-Transportfaser (14) vorgesehen ist, deren numerische Apertur gleich oder größer ist als die numerische Apertur der Multimode-Mischfaser (2).

2. Lichtleitfaseranordnung nach Anspruch 1, bei der in Ausbreitungsrichtung des Laserstrahls (LS) gesehen nach der Multimode-Mischfaser (2) ein Multimode-Laserverstärker (16) angeordnet ist.

3. Lichtleitfaseranordnung nach Anspruch 1 oder 2, bei der Ausgangsfaser (4), Multimode-Mischfaser (2), ein gegebenenfalls vorhandener Multimode-Laserverstärker (16) und Multimode-Transportfaser (14) unmittelbar optisch aneinander gekoppelt sind.

4. Lichtleitfaseranordnung nach Anspruch 1, 2 oder 3, bei der die Multimode-Mischfaser (2) in Form einer Spule mit einer Vielzahl von Windungen (10) gewickelt ist.

5. Lichtleitfaseranordnung nach einem der vorhergehenden Ansprüche, bei der an zumindest einem Ende der Multimode-Mischfaser (2) ein Modenstripper angeordnet ist.

6. Laseranordnung mit einem Faserlaser (6) als Laserstrahlquelle sowie mit einer an dessen Ausgangsfaser (4) optisch gekoppelten Lichtleitfaseranordnung nach einem der vorhergehenden Ansprüche.
